# EUROPEAN PATENT SPECIFICATION

(11) **EP 2 153 412 B1**
(45) Date of publication and mention of the grant of the patent: **03.07.2013**
(21) Application number: 08749928.1
(22) Date of filing: 30.04.2008
(51) Int. Cl.: G06T 11/60

(54) **APPARATUS AND METHOD FOR PROVIDING A CONTAINER WITH A CUSTOMIZED DESIGN**
VORRICHTUNG UND VERFAHREN ZUR BEREITSTELLUNG EINES BEHÄLTERS MIT ANGEPASSTEM ENTWURF
APPAREIL ET PROCÉDÉ PERMETTANT DE FOURNIR UN RÉCIPIENT AVEC UNE CONCEPTION SUR MESURE

(30) Priority: 05.06.2007 EP 07109588
(43) Date of publication of application: 17.02.2010
(73) Proprietor: Philip Morris Products S.A., 2000 Neuchâtel (CH)
(72) Inventor: SCHULTCHEN, Arne, 22359 Hamburg (DE); FELDMANN, Andre, 22395 Hamburg (DE)
(74) Representative: Bohest AG
(86) International application number: PCT/EP2008/055346
(87) International publication number: WO 2008/148612

(56) References cited:
- EP-A- 0 905 027
- US-A1- 2005 104 897

## Description

The present invention relates to an apparatus and a method for providing a container having an individually customized surface design or outer appearance. Furthermore, the invention relates to a container (whitepack) for use in said apparatus and method.

It is known to manufacture or vend various consumer goods with a personalized printed design, such as watches, card products, wrapping paper, compact discs or stamps. For example, US-A-6,473,666 discloses a watch manufacturing machine which chooses and assembles components of a watch in accordance with design information selected or prepared by the customer. The dial of the watch may be customized by printing the designed pattern on the dial surface.

US-A-5,615,123 and WO-A-92/17851 provide systems for creating and producing personalized greeting cards. The systems allow the sender, for example, to personalize a greeting card by adding the name or other personalized data of the recipient. The known vending machines may include audio or video presentations of available products.

US-A-2005/0104897 discloses an image cropping system which allows the user to crop an image he may wish to be applied to a selected image area of a product, for example on a selected area on the front face of a postcard. For that reason, a cropping indicator is provided in form of a crop box having a constant height to width ratio corresponding to the height to width ratio of the selected image area of the product. With the aid of the crop box the user may crop an image or a part thereof, which can easily be resized, if necessary, to properly fit into the selected image area of the product, since the cropped image has the same height to width ratio as the selected image area of the product. EP 0905027 A1 teaches to print comstomised items a rectangular part on the front or back panel of a cigarete package. Customised items are e.g. multilingual health warnigs or ornamental details.

There still is a need for a system allowing consumers to create and produce containers for consumer goods which have an individually customized design. It is an object of the present invention to provide such system.

The present invention provides an apparatus which enables a user to individually design at least a part of one or more panels of a container for packaging consumer goods. Such container with an individually customized surface design is obtained by applying at least one selected design element to a dedicated surface area of a so-called 'whitepack'. As used herein, the term 'whitepack' refers to a container with one or more external surface areas dedicated to modification and customization by a user or consumer. Preferably, modification of a surface area and customization of the whitepack involve applying one or more design elements to at least one of the dedicated surface areas. A dedicated surface area is a predetermined space on the external surface of a panel of the whitepack which space is suitable for modification in an apparatus of the present invention, for example by printing.

Generally, the present invention provides an apparatus for providing a container with a customized design, comprising:
a memory containing at least one set of data comprising a plurality of design elements;
reading means for the reading of an identification mark being provided on the whitepack;
a user interface enabling the consumer to interact with the apparatus, said user interface comprising interface means and display means;
an application unit for applying at least one selected design element to the at least one surface area on a whitepack which area is dedicated for customization;
reading means for reading an identification mark being provided on the whitepack, and
a logic control unit.

More specifically, the present invention provides an apparatus for providing a container having at least one surface with a customized design, comprising:
a memory containing at least one set of data comprising a plurality of design elements;
a user interface comprising interface means and display means enabling the consumer to interact with the apparatus to allow the generation of a customized design of at least one surface of a virtual whitepack through selection and placement of the at least one of the design elements of a library of selectable design elements and through visual representation of the at least one selected design element on the at least one surface of the virtual whitepack,
an application unit for applying the customized design of the at least one surface of the virtual whitepack to the corresponding at least one surface of the whitepack so as to obtain the container having the at least one surface with the customized design,
reading means for reading an identification mark being provided on the whitepack, and
a logic control unit to which the memory, the user interface, the application unit and the reading means are connected, the present invention also provides a corresponding method. The identification mark on the whitepack determing the library of selectable design elements which is made accessible to a consumer.

The at least one set of data comprises a plurality of design elements, for example a library of predetermined design elements from which the user may select. For example, in order to enable brand specific customization, several libraries may be provided for in the memory. However, the accessibility of a particular library may depend on the presence of a particular identification mark on the whitepack. More specifically, the whitepack may be marked with a bar code or a graphic symbol which encodes specific branding information and thus determines which set of data and library of design elements is accessible by and visible to the user.

A set of data in the memory may, for example, include image files, fonts and other design elements. Preferably, one set of data comprises the plurality of predetermined design elements available for customization of a particular brand. Advantageously, this one set of data is arranged in one archive or folder. Design elements available for customization include, for example, icons, images, colours, lettering and surface structures. The user may choose to select one or more design elements to customize a particular dedicated surface area. For example, the user may choose to apply a backgound colour on part or all of said dedicated area (which colour is different from the colour originally provided for), branding-related information including symbols and one or more other icons.

If desired, the memory may provide additional memory space to allow the transfer/upload of additional data, for example via the Internet.

Generally, customization of the whitepack may involve graphic or haptic modification, or a combination thereof, of the whitepack surface through application of at least one selected design element to a dedicated surface area. Preferably, the modifaction is graphic and implemented by printing one or more design elements onto the dedicated surface area or areas. Typically, the whitepack differs from the customized container provided by the present invention in that all dedicated surface areas have been modified with one or more design elements selected by the user.

Generally, the whitepack may be made of any suitable material or combination of materials including, for example, paper, cardboard, metal and plastic. Advantageously, the at least one panel of the whitepack comprising a dedicated surface area is made of a material which can readily be printed by a suitable printing unit. Preferably, the whitepack is made of paper, more preferably it is made of cardboard. While the paper or cardboard may or may not be lacquered outside the dedicated surface areas, a dedicated surface area has a surface suitable for modification.

Preferably, the whitepack is a container of substantially rectangular parallelepipedal shape, with right-angled longitudinal and right-angled transverse edges. If desired, the whitepack may comprise one or more rounded longitudinal edges, rounded transverse edges, bevelled longitudinal edges, bevelled transverse edges, or any combination thereof. Preferably, the whitepack is a hinge-lid container comprising a box portion and a lid portion hinged to said box portion. Advantageously, the whitepack is filled with the products to be packaged. This will enhance the stability and rigidity of such whitepack during the customization operation. For example, the whitepack may be filled with smoking articles. The substantially rectangular parallelepipedal whitepack has a front panel, a rear panel, two side panels, a bottom panel and a top panel. While a panel may have more than one dedicated surface area, preferably it has only one such area. Preferably, only one or two of the whitepack panels provide one or more surface areas dedicated for customization with at least one predetermined design element. In case of two panels with dedicated surface areas, the panels are preferably opposite each other. Most preferably, the front and the rear panel of the whitepack each provide one dedicated free surface area for customization by means of the apparatus according to the invention. Advantageously, a dedicated surface area is rectangular and limited by a frame of up to about 4 mm width. Such frame has the advantage of position tolerance compensation and may or may not be visible on the whitepack. However, it will be visible on the customized container.

In a particularly preferred embodiment of the present invention, the whitepack is a container of smoking articles. Typically, such container is a so-called 'hard pack' made of cardboard containing a plurality of smoking articles such as, for example, cigarettes, cigarillos, cigars or tobacco portions, or is a display carton containing a plurality of individual packs of smoking articles. Most preferably, the whitepack is a container of smoking articles from which the transparent outer wrapper has been removed. Alternatively, the whitepack may be a reusable container which can be refilled with a suitable refill pack of cigarettes.

Particularly preferred is a whitepack which is a hinge-lid container of smoking articles. Such whitepack is characterized in that it has a first dedicated surface area which is rectangular and extends across the upper half of the front panel (including the lid) and a second dedicated surface area which is rectangular and extends across a part of the rear panel below the hinge line. Preferably, both dedicated surface areas extend across the entire width of the respective panel. Preferably, the second dedicated surface area is smaller than the first dedicated surface area. Both dedicated surface areas are limited by rectangular inner frames. The inner frame of the first dedicated surface area abuts against both longitudinal edges and the top transverse edge of the container front panel. The inner frame of the second dedicated surface area abuts against both longitudinal edges of the container rear panel. Preferably, the surface design of all whitepack panels is predetermined outside the dedicated surface areas. For example, the panels are covered with preprinted information, graphic or other elements or any combination thereof provided by the vendor of the pack. On the customized container provided by the present invention, such preprinted information and elements are retained without change. Such preprinted information and elements may comprise, for example, product or branding related information, information required by law, such as health warnings, and a label, such as a tax stamp.

Preferably, one or more parameters of a given design element selectable by the user can be modified within predetermined ranges. Parameters which may be subject to modification by the consumer include, for example, size, colour or orientation of the design element. This provides the consumer with a broader range of design options. Design elements can be placed in such a way that only parts of the original design elements are within the frame, those parts extending beyond the frame will be cut off and not applied.

The user interface allows to visually represent and The user represent and control the placing of at least one selected design element to the desired dedicated surface area of the whitepack. Specifically, the user inferface enables the user to select at least one design element from the accessible set of data with design elements. Preferably, the user interface also enables the user to preview the application of a selected design element to the respective dedicated surface area on a virtual whitepack shown on a display. Suitable interface means are known in the art and include, for example, a touch screen, a keyboard, a mouse, a track ball or a combination thereof. The user interface may also include tear-off menues, pull-down menues, floating buttons, dialog boxes, alternate keyboard command or mouse shortcuts, and the like. Suitable display means are known in the art and include, for example, a screen, a beamer, or both.

The application unit comprises suitable means to apply a selected design element onto a chosen dedicated surface area of the whitepack. The application of the at least one design element may be achieved through any technique and means suitable for graphically or haptically modifying the dedicated surface areas of the whitepack. Suitable application techniques include, for example, coating, spraying, embossing, debossing, printing and any combination of such techniques. Generally, the techniques and means must be suitable for high quality application to the material of the whitepack, in particular to the material of the dedicated surface areas of the whitepack. To facilitate application of the at least one design element, the panels of the whitepack which have dedicated surface areas have a plane external surface.

The memory, the user interface and the application unit are operatively connected to a logic control unit. Operatively connected includes transmission or communication means such as electrical means, radio, network, and the like. Preferably, the memory, the user interface, the appplication unit and the logic control unit are integrated into the same component. The logical control unit allows the user to save a design and store customization data in the memory.

Most preferably, the at least one selected design element is applied to a designated surface area of the whitepack by printing. Therefore, in a preferred embodiment the application unit of the apparatus according to the present invention is a printing unit for printing the at least one selected design element onto the dedicated surface areas. The printing unit may, for example, comprise a laser printing head or more preferably an ink jet printing head performing the printing operations. The printing unit may comprise one or more printing heads. Preferably, the printing unit comprises one ink jet printing head.

In a preferred aspect of the present invention, the apparatus may comprise a handling unit which allows to position the whitepack such that a selected design element is applied within the boundaries of the assigned dedicated surface area. Preferably, the selected design elements are applied, for example printed, while the whitepack is moving through the printing unit. In this respect, it is to be noted that the speed with which the whitepack is moved during application (e.g. ink-jet printing) may be adapted to the respective application technique so that the whitepack can be moved with optimal speed. The handling unit comprises means for transportation. Such means include means for linear or rotational movement, or both. For example, the handling unit may comprise means for rotational movement to move the whitepack from a first printing position, in which the first whitepack panel with a dedicated surface area is arranged in the same plane as the printing plane of the printer head, to a second printing position, in which the second whitepack panel with a dedicated surface area is arranged in the same plane as the printing plane of the printer head. The handling unit may also comprise positioning means such as sensors, registration marks and stops.

In a further embodiment according to the present invention, the apparatus comprises a console installed at a customer location. Such customer location is any point of disposal of the whitepack to a consumer whether by sale or otherwise. For example, if the whitepack is a container of cigarettes, the customer location may be a tobacco kiosk, brand store, duty free shop or other point of sale, or a lounge, promotional stand or other point of distribution. Preferably, the console enables a user to create and produce the customized container at the same location.

In a preferred embodiment the console according to the present invention comprises a feed-channel for manual insertion of the whitepack and a handling unit comprising transportation means for transporting the whitepack to the (first) printing position. Alternatively, the console may comprise a magazine containing a stock of whitepacks. In this embodiment of the invention, the handling unit additionally comprise means for grasping a single whitepack from the magazine.

In another embodiment of the apparatus according to the invention, the user interface may be installed at a private location. For example, the user interface may be part of a personal computer at a user's home. In this embodiment the other essential and optional components of the apparatus of the invention are located remotely from the user interface. For example, the at least one design element selected by means of the user interface may be transmitted to the application unit via a communication network, for example via Internet, where it is applied to one or more whitepacks. This is a convenient way for the user to design the customized container at his personal computer at home and to have it produced at a remote location. The consumer may thus order one or more cartons comprising a plurality of containers with his customized design.

The invention is further described by way of example with reference to the accompanying drawings in which:
- Fig. 1: shows a perspective view of an embodiment of an apparatus for creating and producing an individually customized container of smoking articles comprising a console (without rear panel);
- Fig. 2: shows a sectional view of the console of Fig. 1;
- Fig. 3: shows a front view of the console of Fig. 1;
- Fig. 4: shows a flow chart of the steps which are involved in the use of the console of Fig. 1;
- Fig.5-13: show the steps involved in printing the designated surface areas on the front panel and the rear panel starting from a whitepack, and
- Fig. 14: shows a rear perspective view of an individually customized container of smoking articles.

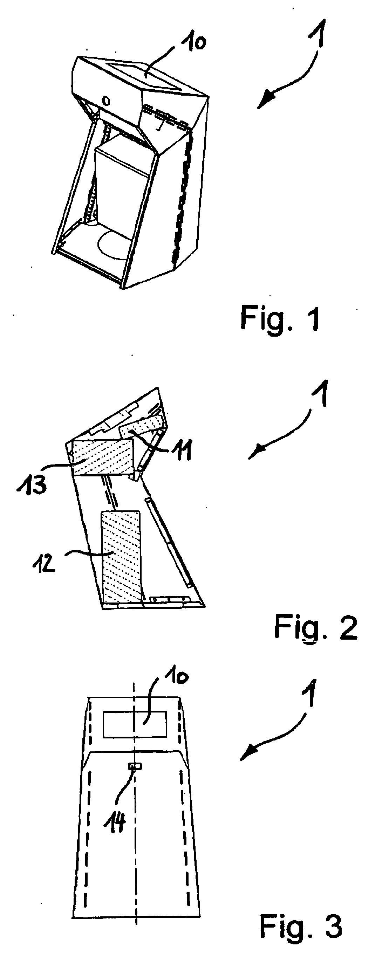

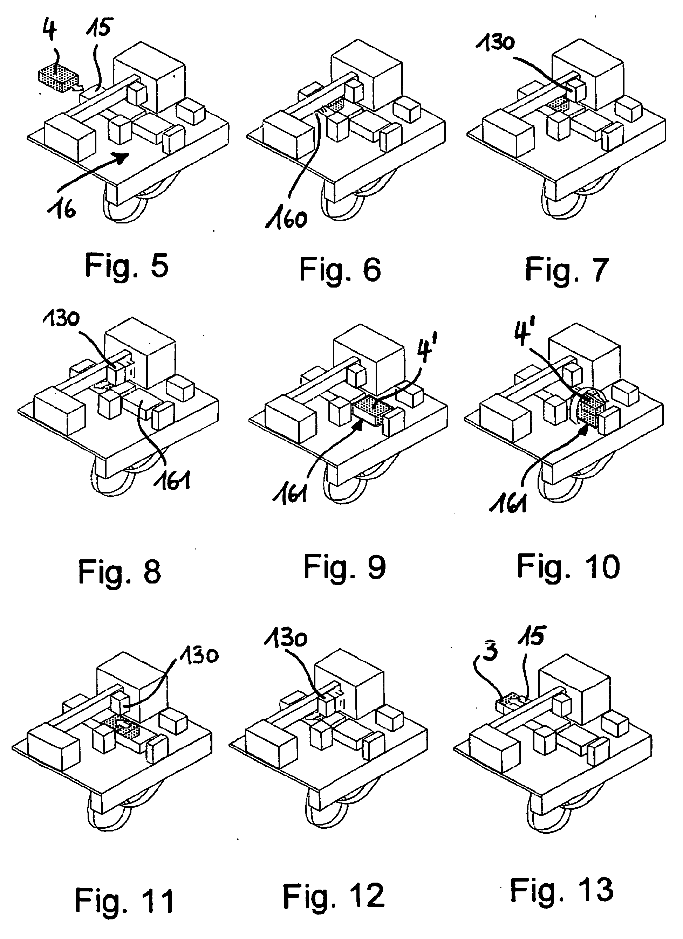

Console 1 shown in Figures 1 to 3 is located at a customer location. Console 1 comprises a graphical user interface (software-implemented) comprising a touch screen 10 for entering commands and for visual representation. In addition, console 1 comprises a video-projector or screen 11 as an additional display means which allows others to watch the customization operation. A computer 12 and an ink jet printer 13 are arranged within console 1. A plurality of design elements is stored in the memory of computer 12 in one or more sets of data, which can be accessed by the user during customization of the surface design of a whitepack of smoking articles. At its front panel, console 1 is provided with an opening 14 which allows the whitepack to be inserted into a feed-channel 15 (see Figs. 5-13).

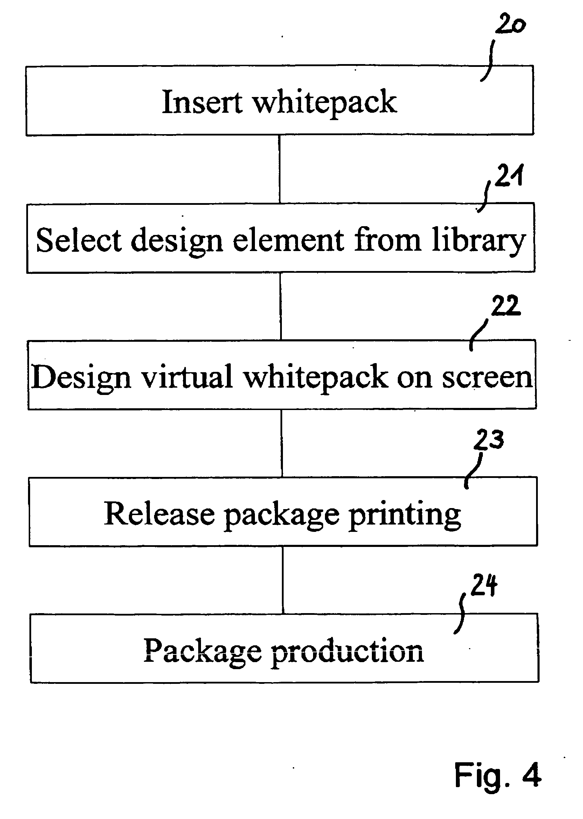

Creation and production of the customized container of smoking articles at console 1 involves the steps shown in the flow chart of Fig. 4.

In a first step 20, the user inserts a rectangular parallelepipedal whitepack 4 of smoking articles made of cardboard through the opening of the console into the feed channel 15 (see Figs. 5-13). A bar-code identification mark may be read automatically (see Fig. 6) by any suitable bar-code reading means 160, and the library of design elements preassigned to the identified brand is made accessible to the user. The next step 21 is the selection a design element from the accessible library of design elements. Subsequent step 22 is the design of a virtual whitepack which is displayed on the screen 10 by assigning the selected design element to a dedicated surface area on the virtual whitepack. To facilitate steps 21 and 22, the screen 10 may be split such that one area of the screen 10 shows the virtual whitepack to be customized while the other area displays the design elements of the library from which the user may select his/her design element or elements. Advantageously, the user is enabled to change a selected design element with regard to size, colour and orientation within certain predetermined ranges.

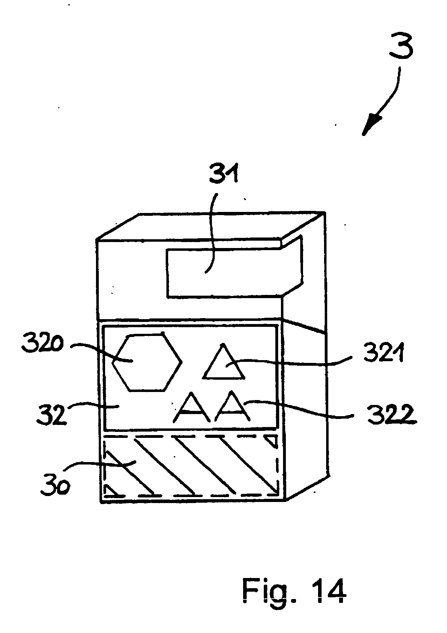

Fig. 14 shows a rear perspective view of a customized hinge-lid container 3 of smoking articles. Area 30 was preprinted on the whitepack and provides a health warning. The additional information and graphic elements preprinted on the whitepack are not shown. Tax stamp 31 extends across the lid rear panel and the right side panel. Area 32 in the upper half of the box rear panel is a dedicated surface area which has been customized by application of four design elements. Graphic design elements 320 and 321 as well as two characters 322, for example representing the user's initials, have been selected and printed on the area 32.

The image of the virtual whitepack on the screen 10 of console 1 may be two-dimensional or three-dimensional; a two-dimensional image of the surface of the panel to be customized is sufficient. Accordingly, during customization of the rear panel of the virtual whitepack only this rear panel may be shown on screen 10 of console 1.

For customization of the rear panel of the virtual whitepack on screen 10 the consumer selects a design element from the file and assigns it to the dedicated surface area on the rear panel (area 32 of the customized container shown in Fig. 14), for example said icon onto the surface area. Once the user has finished the customization of the virtual whitepack he confirms his selections via the user interface. The printing operations are then released in accordance with step 23 of the flow chart of Fig. In subsequent step 24, the customized container is produced by means of the printer 13 at console 1. This is explained in further detail below.

Once the consumer has finalized the design of the whitepack 4, the whitepack is drawn through a feed-channel 15 (see Fig. 5) into a first printing position by a handling unit 16. When the whitepack 4 has reached the first printing position (see Fig. 7), a printing head 130 or other printing means of the printer 13 (see Fig. 2) of console 1 prints the selected design elements within area 32 (see Fig. 14) of the front panel of the whitepack 4, as schematically indicated in Fig. 8. Once printing on the front panel of the whitepack 4 has been completed, the whitepack 4' - already customized on its front panel - is rotated by 180 degrees and brought into a second printing position (see Fig. 11). In the second printing position, the design elements selected for the dedicated surface area on the rear panel of the customized whitepack 4' are printed (see Fig. 12). After printing on the rear panel has been completed, the final customized container of smoking articles 3 is moved through feed-channel 15 to opening 14 in the front panel out of console 1, where the user receives his individually customized container 3.

In an alternative embodiment, the handling unit may comprise transportation means which are somewhat different from those shown in Figs. 5-13. The transportation means which transport the whitepack to an application position may comprise a holder into which the whitepack may be inserted. The U-shaped holder is movable along a guiding rail into a printing position where the selected design elements for the front panel are printed onto the dedicated area of the front panel of the whitepack. After having completed printing of the front panel of the whitepack, the holder together with the whitepack is then further moved along the guiding rail to a rotation motor which rotates the holder together with the whitepack, so that the rear panel of the whitepack now faces upwards. The holder together with the whitepack is then moved along the guiding rail back to the printing position where the selected design elements for the rear panel are printed onto the dedicated area of the rear panel of the whitepack. The holder together with the final customized container is then moved back to its initial position along the guide rail, so that the consumer may then receive the individually customized container.

## Claims

1. Apparatus for providing a container (3) having at least one surface with a customized design, comprising:
- a memory containing at least one set of data comprising a plurality of design elements (320,321,322);
- reading means (160) for the reading of an identification mark being provided on a whitepack (4);
- a user interface (10) comprising interface means and display means enabling the consumer to interact with the apparatus to allow the generation of a customized design of at least one surface of a virtual whitepack through selection and placement of at least one of the design elements of a library of selectable design elements (320,321,322) and through visual representation of the selected at least one design element (320,321,322) on the at least one surface of the virtual whitepack,
- an application unit (13) for applying the customized design of the at least one surface of the virtual whitepack to the corresponding at least one surface of the whitepack (4) so as to obtain the container (3) having the at least one surface with the customized design, and
- a logic control unit (12) to which the memory, the user interface, the application unit (13) and the reading means (160) are connected, **characterised by** the indentification mark on the whitepark (4) determing the library of selectable design elements which is made accessible to a consumer.

2. Apparatus according to claim 1, wherein the at least one surface of the whitepack (4) comprises one or more dedicated areas to which application of the customized design is allowed only, and wherein the interface means is adapted to allow placement of a selected design element (320,321,322) only within one or more dedicated areas of the virtual whitepack corresponding to the one or more dedicated areas of the whitepack to which application of the customized design is allowed.

3. Apparatus according to any one of the preceding claims, comprising a console (1) in which the memory, the user interface (10) the application unit (13) and the logic control unit (12) are integrated.

4. Apparatus according to claim 3, wherein the console (1) comprises a handling unit (16) comprising transportation means for transporting the whitepack (4) to an application position where application of the customized design to the whitepack (4) is performed.

5. Apparatus according to claim 4, wherein the console (1) comprises a feed-channel (15) for manual insertion of the whitepack (4), or a magazine containing a plurality of whitepacks from which the whitepack is grasped automatically.

6. Apparatus according to claim 4, wherein the console (1) comprises a holder for insertion of the whitepack, which is movable along a guiding rail.

7. Apparatus according to claim 3, wherein the user interface is installed at one location while the other components of the apparatus are installed at a location remote from the user interface.

8. A method for providing a container (3) having at least one surface with a customized design, comprising the steps of:
- generating a customized design of at least one surface of a virtual whitepack corresponding to the at least one surface of a whitepack (4) to which the customized design is to be applied through selection and placement of a design element (320,321,322) to be selected from a plurality of design elements;
- applying the determined customized design of the at least one surface of the virtual whitepack to the corresponding.at least one surface of the whitepack (4), wherein the step of generating a customized design comprises the steps of:
- reading an identification mark on the whitepack (4) to which the customized design is to be applied, and
- making a library of design elements accessible to the user for selection and placement on the at least one surface of the virtual whitepack, **characterised by**
- determining the library of selectable design elements in accordance with the identification mark reak from the whitepack (4).

## Patentansprüche

1. Vorrichtung zum Bereitstellen eines Behältnisses (3) mit mindestens einer Oberfläche mit einer kundenspezifischen Gestaltung, umfassend:
- einen Speicher, der mindestens einen Datensatz mit einer Vielzahl von Gestaltungselementen (320, 321, 322) beinhaltet;
- Lesenittel (160) zum Lesen einer Identifikationsmarkierung auf einem unbedruckten Behältnis (4);
- eine Benutzerschnittstelle (10) umfassend Schnittstellenmittel und Anzeigemittel, die es dem Verbraucher ermöglichen mit der Vorrichtung zu interagieren, um die Erzeugung einer kundenspezifischen Gestaltung mindestens einer Oberfläche eines virtuellen, unbedruckten Behältnisses zu ermöglichen, durch Auswahl und Platzierung von mindestens einem der Gestaltungselemente aus einer Bibliothek auswählbarer Gestaltungselemente (320, 321, 322) und durch visuelle Darstellung des ausgewählten mindestens einen Gestaltungselements (320, 321, 322) auf der mindestens einen Oberfläche des virtuellen, unbedruckten Behältnisses,
- eine Applikationseinheit (13) zum Aufbringen der kundenspezifischen Gestaltung der mindestens einen Oberfläche des virtuellen, unbedruckten Behältnisses auf die entsprechende mindestens eine Oberfläche des unbedruckten Behältnisses, um so das Behältnis (3) mit der mindestens einen Oberfläche mit der kundenspezifischen Gestaltung zu erhalten, und
- eine logische Steuereinheit (12), an die der Speicher, die Benutzerschnittstelle, die Applikationseinheit (13) und die Lesemittel (160) angeschlossen sind,
**dadurch gekennzeichnet, dass** die Identifikationsmarkierung auf dem unbedruckten Behältnis (4) die Bibliothek auswählbarer Gestaltungselemente festlegt, die einem Verbraucher zugänglich gemacht wird.

2. Vorrichtung nach Anspruch 1, wobei die mindestens eine Oberfläche des unbedruckten Behältnisses (4) einen oder mehrere vorbestimmte Bereiche umfasst, in welchen die kundenspezifische Gestaltung ausschliesslich aufgebracht werden darf, und wobei die Schnittstellenmittel derart angepasst sind, um die Platzierung eines ausgewählten Gestaltungselements (320, 321, 322) ausschliesslich in einem oder mehreren vorbestimmten Bereichen des virtuellen, unbedruckten Behältnisses zu ermöglichen, die dem einen oder mehreren vorbestimmten Bereichen des unbedruckten Behältnisses entsprechen, in welchen die kundenspezifische Gestaltung aufgebracht werden darf.

3. Vorrichtung nach einem der vorhergehenden Ansprüche, umfassend eine Konsole (1), in die der Speicher, die Benutzerschnittstelle (10), die Applikationseinheit (13) und die logische Steuereinheit (12) integriert sind.

4. Vorrichtung nach Anspruch 3, wobei die Konsole (1) eine Handhabungseinheit (16) umfasst, umfassend Transportmittel zum Transportieren des unbedruckten Behältnisses (4) zu einer Aufbringposition, in welcher das Aufbringen der kundenspezifischen Gestaltung auf das unbedruckte Behältnis (4) erfolgt.

5. Vorrichtung nach Anspruch 4, wobei die Konsole (1) einen Zuführkanal (15) zum manuellen Zuführen des unbedruckten Behältnisses (4) umfasst oder ein Magazin enthaltend einer Vielzahl unbedruckter Behältnisse, aus denen das unbedruckte Behältnis automatisch gegriffen wird.

6. Vorrichtung nach Anspruch 4, wobei die Konsole (1) eine Halterung zum Einsetzen des unbedruckten Behältnisses umfasst, die entlang einer Führungsschiene bewegbar ist.

7. Vorrichtung nach Anspruch 3, wobei die Benutzerschnittstelle an einem Ort installiert ist, während die anderen Komponenten der Vorrichtung an einem Ort fern von der Benutzerschnittstelle installiert sind.

8. Verfahren zum Bereitstellen eines Behältnisses (3) mit mindestens einer Oberfläche mit einer kundenspezifischen Gestaltung, umfassend die folgenden Schritte:
- Erzeugen einer kundenspezifischen Gestaltung von mindestens einer Oberfläche eines virtuellen, unbedruckten Behältnisses, die der mindestens einen Oberfläche eines unbedruckten Behältnisses (4) entspricht, auf die die kundenspezifische Gestaltung aufgebracht werden soll, durch Auswahl und Platzierung eines Gestaltungselements (320, 321, 322) ausgewählt aus einer Vielzahl von Gestaltungselementen,
- Aufbringen der festgelegten, kundenspezifischen Gestaltung der mindestens einen Oberfläche des virtuellen, unbedruckten Behältnisses auf die entsprechende mindestens eine Oberfläche des unbedruckten Behältnisses (4), wobei der Schritt des Erzeugens einer kundenspezifischen Gestaltung die Schritte umfasst:
- Lesen einer Identifikationsmarkierung auf dem unbedruckten Behältnis (4), auf welches die kundenspezifische Gestaltung aufgebracht werden soll, und Zugänglichmachen einer Bibliothek von Gestaltungselementen für den Benutzer zur Auswahl und Platzierung auf der mindestens einen Oberfläche des virtuellen, unbedruckten Behältnisses, **gekennzeichnet durch**
- Festlegen der Bibliothek von auswählbaren Gestaltungselementen entsprechend der von dem unbedruckten Behältnis gelesenen Identifikationsmarkierung.

## Revendications

1. Appareil destiné à fournir un contenant (3) présentant au moins une surface avec un dessin personnalisé, comprenant :
- une mémoire contenant au moins un ensemble de données comprenant une pluralité d'éléments de dessin (320, 321, 322) ;
- des moyens de lecture (160) destinés à lire une marque d'identification disposée sur un contenant sans marquage (4) ;
- une interface utilisateur (10) comprenant des moyens d'interface et des moyens d'affichage permettant à un consommateur d'interagir avec l'appareil pour permettre la génération d'un dessin personnalisé d'au moins une surface d'un contenant sans marquage virtuel grâce à la sélection et au placement de l'un au moins des éléments de dessin d'une bibliothèque d'éléments de dessin sélectionnables (320, 321, 322) et grâce à une représentation visuelle du au moins un élément de dessin sélectionné (320, 321, 322) sur la au moins une surface du contenant sans marquage virtuel ;
- une unité d'application (13) destinée à appliquer le dessin personnalisé de la au moins une surface du contenant sans marquage virtuel sur la au moins une surface correspondante du contenant sans marquage (4) afin d'obtenir un contenant (3) présentant la au moins une surface avec le dessin personnalisé ; et
- une unité de commande logique (12) à laquelle sont connectés la mémoire, l'interface utilisateur, l'unité d'application (13) et le moyen de lecture (160) ;
**caractérisé par le fait que** :
- la marque d'identification sur le contenant sans marquage (4) détermine la bibliothèque d'éléments de dessin sélectionnables, qui est mise à la disposition d'un consommateur.

2. Appareil selon la revendication 1, dans lequel la au moins une surface du contenant sans marquage (4) comprend une ou plusieurs zones dédiées sur lesquelles l'application du dessin personnalisé est seulement permise, et dans lequel les moyens d'interface sont adaptés pour permettre le placement d'un élément de dessin sélectionné (320, 321, 322) seulement à l'intérieur d'une ou de plusieurs zones dédiées du contenant sans marquage virtuel qui correspondent aux une ou plusieurs zones dédiées du contenant sans marquage sur lesquelles est permise l'application du dessin personnalisé.

3. Appareil selon l'une quelconque des revendications précédentes, comprenant une console (1) dans laquelle sont intégrées la mémoire, l'interface utilisateur (10), l'unité d'application (13) et l'unité de commande logique (12).

4. Appareil selon la revendication 3, dans lequel la console (1) comprend une unité de manipulation (16) comprenant des moyens de transport destinés à transporter le contenant sans marquage (4) vers une position d'application où est exécutée l'application du dessin personnalisé sur le contenant sans marquage (4).

5. Appareil selon la revendication 4, dans lequel la console (1) comprend un canal d'approvisionnement (15) destiné à une insertion manuelle du contenant sans marquage (4), ou un magasin contenant une pluralité de contenants sans marquage à partir desquels le contenant sans marquage est prélevé de manière automatique.

6. Appareil selon la revendication 4, dans lequel la console (1) comprend un support destiné à l'insertion du contenant sans marquage, qui est mobile le long d'un rail de guidage.

7. Appareil selon la revendication 3, dans lequel l'interface utilisateur est installée au niveau d'un emplacement tandis que les autres composants de l'appareil sont installés au niveau d'un emplacement distant de l'interface utilisateur.

8. Procédé destiné à fournir un contenant (3) présentant au moins une surface avec un dessin personnalisé, comprenant les étapes consistant à :
- générer un dessin personnalisé d'au moins une surface d'un contenant sans marquage virtuel correspondant à la au moins une surface d'un contenant sans marquage (4) sur laquelle doit être appliqué le dessin personnalisé grâce à la sélection et au placement d'un élément de dessin (320, 321, 322) à sélectionner parmi une pluralité d'éléments de dessin ;
- appliquer le dessin personnalisé déterminé de la au moins une surface du contenant sans marquage virtuel à la au moins une surface correspondante du contenant sans marquage (4), où l'étape consistant à générer un dessin personnalisé comprend les étapes consistant à :
- lire une marque d'identification sur le contenant sans marquage (4) sur lequel doit être appliqué le dessin personnalisé ; et
- rendre accessible à l'utilisateur une bibliothèque d'éléments de dessin pour une sélection et un placement sur la au moins une surface du contenant sans marquage virtuel ;
**caractérisé par** :
- le fait de déterminer la bibliothèque d'éléments de dessin sélectionnables selon la marque d'identification lue à partir du contenant sans marquage (4).
